# EUROPÄISCHE PATENTSCHRIFT

(11) **EP 0 677 445 B1**
(45) Veröffentlichungstag und Bekanntmachung des Hinweises auf die Patenterteilung: **16.07.1997**
(21) Anmeldenummer: 95103886.8
(22) Anmeldetag: 16.03.1995
(51) Int. Cl.: B65D 1/20, B29C 49/48, B29C 49/58

(54) **Behälter mit Belüftungskanal für den Transport von Flüssigkeiten**
Container having air venting passage for transporting liquids
Récipient avec passage d'aération pour le transport de liquides

(30) Priorität: 15.04.1994 DE 9406266 U
(43) Veröffentlichungstag der Anmeldung: 18.10.1995
(73) Patentinhaber: Frohn, Walter Dr.-Ing., D-81545 München (DE)
(72) Erfinder: Frohn, Walter Dr.-Ing., D-81545 München (DE)
(74) Vertreter: Freiherr von Welser, Hubert

(56) Entgegenhaltungen:
- EP-A- 0 058 624
- DE-U- 9 004 463
- DE-U- 9 102 198
- FR-A- 2 675 771
- FR-E- 84 154
- GB-A- 1 160 983
- GB-A- 2 098 572
- US-A- 4 838 464
- US-A- 5 346 106

## Beschreibung

Die Erfindung betrifft einen Behälter für die Lagerung und den Transport von Flüssigkeiten, insbesondere gefährlichen Flüssigkeiten, der im Blasvorgang aus Kunststoff hergestellt ist und einen Ein- und Ausgießstutzen an einer Seitenwand und einen im Blasvorgang durch Quetschkanten des Blaswerkzeugs gebildeten Belüftungskanal zur Belüftung des bei Entleerung des Behälters in diesem entstehenden Unterdruckbereiches mit einer im Ein- und Ausgießstutzen des Behälters vorgesehenen Einlaßöffnung aufweist sowie eine Vorrichtung zu seiner Herstellung.

Der Belüftungskanal soll durch Ausgleichen eines beim Entleeren des Behälters in diesem entstehenden Unterdruckes ein durch diesen verursachtes periodisches Unterbrechen oder Stören des Ausgießflusses, das sogenannte Gluckern verhindern, das unvermeidbar zu Verschütten oder Verspritzen der Inhaltsflüssigkeit führt. Dieses muß vor allem bei gefährlichen Flüssigkeiten unter allen Umständen vermieden werden.

In GB-A-2.098.572 und EP-A-0.058.624 B1 werden Belüftungskanäle beschrieben, deren Einlaßöffnungen unterhalb der Höhe des Verschlußgewindes des Einlaßstutzens liegen und in U-förmiger Krümmung in den hohlen Traggriff des Behälters führen, der nach dem beim Entleeren sich bildenden Unterdruckraum offen ist. Dieses U-förmige Rohr füllt sich bei Transport und beim Entleeren mit Inhaltsflüssigkeit. Aus diesem Grund ist an seiner Unterseite eine Ablauföffnung vorgesehen, durch die aber beim Entleeren wieder Inhaltsflüssigkeit eindringen kann und das Ansaugen von Luft behindert oder ganz unterbricht.

In US-A-4,838,464 ist eine im Blasverfahren hergestellte Kunststoffflasche beschrieben, bei der das Gluckern bei Ausgießen, vor allem bei gefährlichen Flüssigkeiten vermieden werden soll. Hierzu ist ein Belüftungskanal bis zum obersten Rand des Ausgießstutzens geführt (Fig. 14 bis 16). Dieser Belüftungskanal ist mit Quetschkanten des Blaswerkzeuges vom Flaschenkörper durch Bildung eines Steges abgetrennt. Die dadurch entstandenen V-förmigen Einbuchtungen der Lippe des Ausgießstutzens verhindern dessen sichere Abdichtung gegenüber seiner Verschlußkappe, vor allem bei auf diese einwirkende Belastungen in nicht senkrechter Richtung und insbesondere bei Stürzen. Ein solcher Verschluß ist für den Transport von Gefahrengut ungeeignet und unzulässig. Dieser Nachteil soll bei den übrigen dort vorgeschlagenen Ausführungsformen dadurch vermieden werden, daß der Belüftungskanal nur bis zum Ende des Flaschenhalses und nicht bis in den Ausgießstutzen geführt wird, so daß dieser eine runde ununterbrochene Lippe aufweisen kann und sein Verschlußgewinde nicht unterbrochen wird. Dies aber hat den entscheidenden Nachteil, daß jedenfalls zu Beginn des Entleerens, also in dessen kritischster Phase, die Inhaltsflüssigkeit in den Belüftungskanal eindringt und diesen verschließt, so daß dann ein Gluckern unvermeidlich ist.

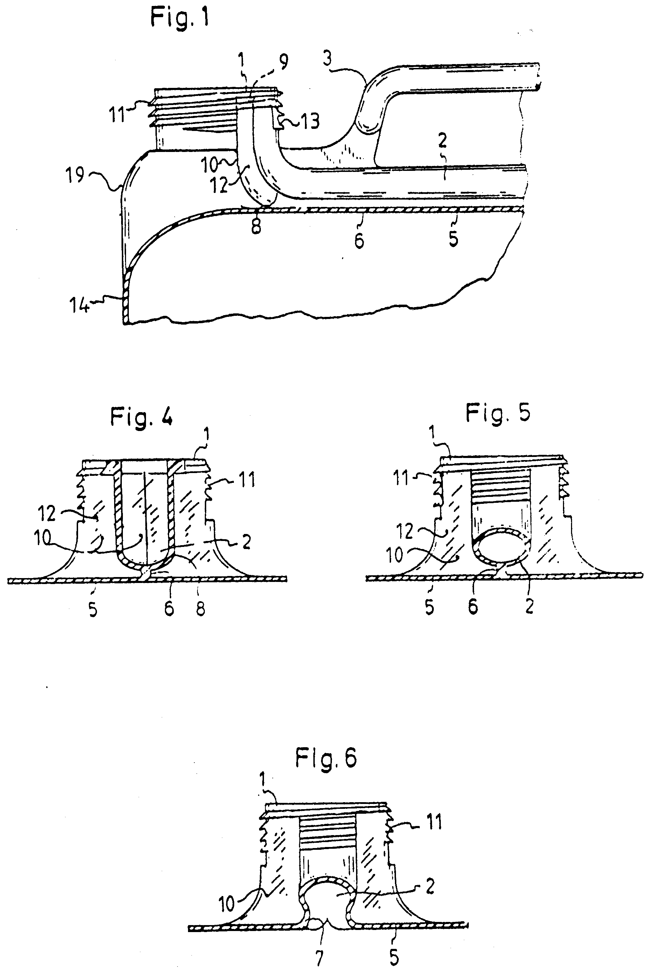

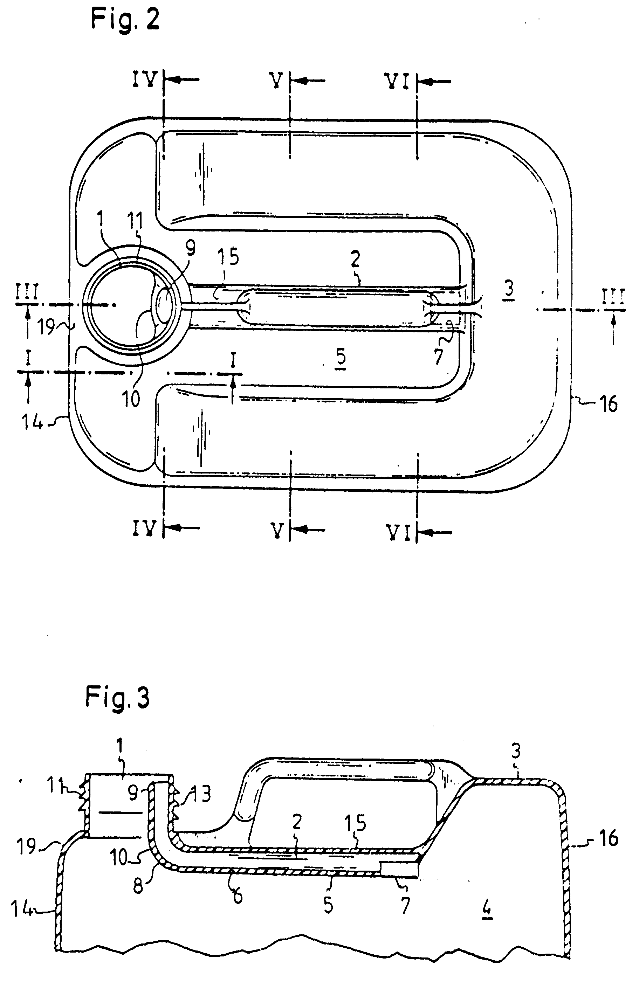

In DE-U-90 04 643.0 Fig.3 und 4 ist ein Behälter beschrieben, der einen waagerecht verlaufenden Belüftungskanal aufweist, der im Ausgießstutzen bis zu dessen Oberkante heraufgeführt ist. Dieser Behälter soll aus Kunststoff im Blasverfahren hergestellt werden. Der Belüftungskanal ist jedoch nicht abgequetscht, sondern verläuft unterhalb des Oberbodens des Behälters und innerhalb des Ausgießstutzens frei im Raum bis auf seine Oberbzw. Rückseite, die von dem Oberboden bzw. der Wand des Ausgießstutzens gebildet sind, wie die Zeichnungen zeigen. Es ist nicht möglich, einen solchen Kanal im Blasverfahren einstückig mit dem Behälter herzustellen. Die Beschreibung enthält dazu auch keinerlei Hinweis. Dies gilt auch für die Ausführungsformen zu Fig.1 und 2 bezüglich des im Ausgießstutzen liegenden Teiles des Belüftungskanales, der sich zudem bei Schwappbewegungen der Inhaltsflüssigkeit in seinem herabgezogenen Abschnitt mit dieser füllt und dadurch verschlossen wird. Es ist also lediglich eine Aufgabe, zudem eine unlösbare, gezeigt.

In GB-A-1.160.983 wird eine Flasche und ihr Herstellungsverfahren und das dazu zu verwendende Blaswerkzeug beschrieben, die einen außen verlaufenden Entleerungskanal zeigt, der im Blasverfahren durch beiderseitige, ein von dem des Behälterinnenraumes abgetrenntes Formnest bildende Quetschkanten aus dem Vorformling abgetrennt wird. Dieser Kanal verläuft nicht in eine, einen Schraubverschluß aufweisende Ausgießöffnung, sondern in eine freistehende Spritzdüse. Dieser Behälter kann auch nicht zum Transport von Flüssigkeiten dienen, da er auf Handdruck auf seinen Körper über den abgquetschten Entleerungskanal entleerbar ist. Das Blaswerkzeug weist zudem einen einzigen Blasdorn auf, über den sowohl der Behälter als auch sein Belüftungskanal aufgeblasen werden soll.

Nach den hier behandelten Vorschlägen läßt sich kein Behälter der eingangs genannten Art herstellen, der ein gluckerfreies, zielgerichtetes Ausgießen seiner Inhaltsflüssigkeit zuläßt. Aufgabe der Erfindung ist aber die Anordnung eines Belüftungskanals, über den wahrend des gesamten Ausgießvorganges von dessen Beginn an ein ungestörter, genau zielgerichteter gleichmäßiger und ununterbrochener Ausgußstrahl entsteht und jedes Gluckern durch Einziehen von Luft vermieden wird.

Diese Aufgabe wird durch die in den Ansprüchen angegebenen Maßnahmen gelöst.

Es ist wesentliches Merkmal, daß der Belüftungskanal bei senkrecht stehendem Behälter abwärts verläuft und bis zu seinem Ende im Unterdruckraum geschlossen ist, um zum Beispiel bei Schwappbewegungen beim Transport eingedrungene Inhaltsflüssigkeit sofort wieder auslaufen zu lassen, ferner, daß der Belüftungskanal bis zur rückwärtigen Behälterseitenwand reicht, damit seine Auslaßöffnung beim Ausgießen von Anfang an über dem Flüssigkeitsspiegel liegt. Vor allem aber muß seine Einlaßöffnung im Ausgießstutzen so weit wie möglich nach oben gezogen sein, um den eintretenden Luftstrom vom Ausgußstrom völlig getrennt zu halten und diesen von der Einlaßöffnung des Belüftungskanales abzulenken.

Mit dem erfindungsgemäßen Behälter ist zum ersten Mal ein einwandfrei gleichmäßiges und zielgenaues Ausgießen möglich geworden.

Ein Ausführungsbeispiel der Erfindung wird im folgenden anhand der Zeichnungen näher beschrieben.
Diese zeigen in
- Fig.1: einen Teilschnitt durch einen erfindungsgemäßen Behälter in der Ebene I-I in Fig.2 mit seitlicher Draufsicht auf den Ein- und Ausgießstutzen;
- Fig.2: eine Draufsicht auf den Behälter zu Fig.1 von oben;
- Fig.3: einen Teilschnitt durch den gleichen Behälter in Ebene III-III in Fig.2;
- Fig.4: einen vertikalen Teilschnitt durch den Behälter zu Fig.1 in Ebene IV-IV in Fig.2;
- Fig.5: einen vertikalen Teilschnitt durch den gleichen Behälter in Ebene V-V in Fig.2;
- Fig.6: einen vertikalen Teilschnitt durch den gleichen Behälter in der Ebene VI-VI in Fig.2;
- Fig.7: eine Draufsicht auf die Teilebene einer zweiteiligen Blasform zur Herstellung eines Behälters nach Fig.1 bis 6, wobei die schraffierten Flächen Eingriffsflächen der Quetschkanten sind;
- Fig.8: einen Vertikalschnitt durch den Blas- und Kalibrierdorn zu dem Blaswerkzeug gem. Fig.7;
- Fig.9: eine Draufsicht auf den Blas- und Kalibrierdorn zu Fig.8 in Richtung des Pfeiles IX in Fig.8.

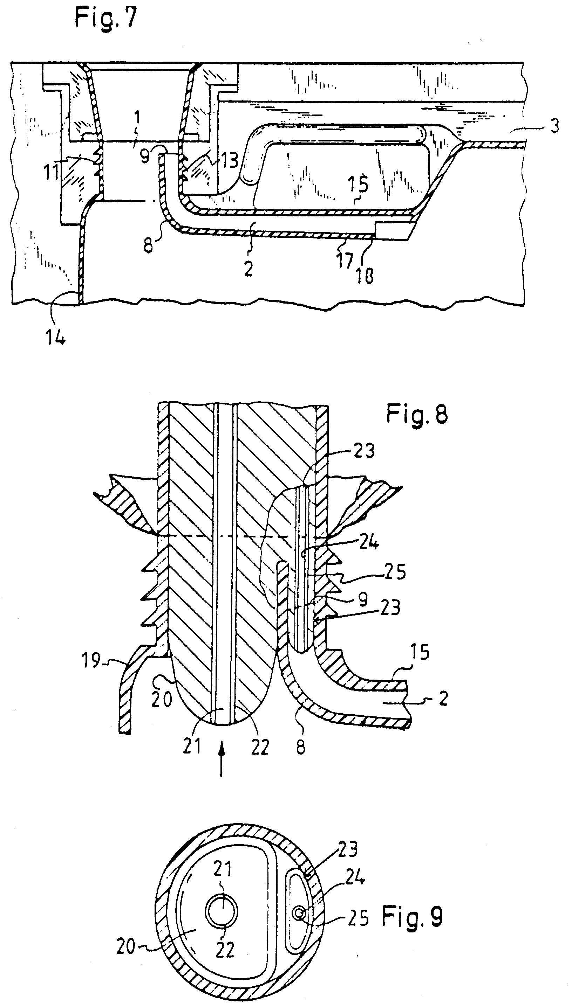

Der in Fig.1 in teilweiser seitlicher Draufsicht und in Fig.3 im Teilschnitt dargestellte erfindungsgemäße stapelbare Behälter weist den den Ein- und Augießstutzen 1 sowie einen Belüftungskanal 2 auf, der vom Inneren des Ein- und Ausgießstutzens 1 bis in die rückwärtige Stapelschulter 3 verläuft. Durch den Belüftungskanal 2 kann Außenluft in den beim Entleeren des Behälters sich bildenden Unterdruckraum 4 unter der Stapelschulter 3 gesaugt werden. Der Belüftungskanal 2 ist mit dem Ein- und Ausgießstutzen 1 und dem Behälteroberboden 5 durch einen durch eine Quetschkante des Blaswerkzeugs (Bezugszeichen 17 in Fig. 3 und 7) gebildeten Steg 6 des Behälterwandungsmaterials verbunden und öffnet sich an seinem hinteren Ende in einer durch den Oberboden 5 des Behälters weisenden Auslaßöffnung 7 (Fig.3 und 6). Der Belüftungskanal 2 ist in den Figuren 4, 5 und 6 in Querschnitten im einzelnen dargestellt. Er greift mit einer Aufwärtsbiegung 8 in das Innere des Ein- und Ausgießstutzens 1 mit nach oben offener Einlaßöffnung 9. Der Steg 6 biegt sich entsprechend nach oben um, wobei sein nach oben gerichtetes Ende den Belüftungskanal von den Austrittsöffnung 7 abtrennt, um den Ausgießstrom von der Einlaßöffnung 9 abzulenken. Der Belüftungskanal 2 ist so hoch wie möglich nach oben gezogen, so daß seine Einlaßöffnung 9 im Bereich der Höhe des obersten Schraubenganges des Schraubengewindes 11 des Ein- und Ausgießstutzens 1 liegt und die unteren Schraubengänge für das Eingreifen der Klemmkanten des Blaswerkzeuges, die den Steg 6 bilden, bei 12 unterbrochen sind, jedoch auf der rückwärtigen Außenseite 13 des Belüftungskanals 2 für einen sicheren Verschluß der Verschlußkappe erhalten bleiben.

In Richtung nach seiner Auslaßöffnung 7 ist der Belüftungskanal 2 um einen kleinen Winkel, 5°, an seiner Unterseite geneigt, so daß in ihn etwa beim Transport gelangte Inhalts- flüssigkeit in Ruhelage sofort in den Behälterraum zurückläuft und er beim Entleeren des Behälters völlig frei ist. In seinem Verlauf kann der Belüftungskanal 2 einen etwa elliptischen Querschnitt aufweisen, wie dies in Fig.5 dargestellt ist. Fig.4 zeigt einen Schnitt durch die Biegung 8 und den Ein- und Ausgießstutzen 1, Fig.6 einen Schnitt durch die Auslaßöffnung 7. In Fig.2 ist die Auslaßöffnung 7 gestrichelt gezeichnet.

Fig.7 zeigt das Blaswerkzeug in der Symmetrieebene mit Schneidkanten, die die Außennaht des Behälters beim Zusammenfahren der zweiteiligen Blasform bilden und die von der Vorderseite 14 des Behälters zum Ein- und Ausgießstutzen 1, von diesem über die Oberseite 15 des Belüftungskanals 2 zur Stapelschulter 3 und zur Rückseite 16 des Behälters verlaufen. Die Unterseite des Belüftungskanals 2 wird von einer Quetschkante 17 gebildet, die von der Stapelschulter 3 über die Biegung 8 in den Ein- und Ausgießstutzen verläuft. Sie bildet bei Werkzeugschluß den Steg 6, die rückwärtige Wand 10 des Ein- und Ausgießstutzens 1 und den Zwischenraum zwischen dieser und dem senkrechten Teil des Belüftungskanales 2. An ihrem rückwärtigen Ende ist die Quetschkante 17 zur Bildung der Auslaßöffnung 7 des Belüftungskanals 2 von ihrem unteren Ende 18 an von der Formteilebene zurückgesetzt, so daß dort der Vorformling nicht eingequetscht wird und so die Auslaßöffnung 7 offenbleibt, wie dies in Fig.7 dargestellt ist.

Beim Blasen des Behälters dringt die Quetschkante 17, wie dies aus Fig.1 und 4 ersichtlich ist, bei 12 tief zwischen dem Hals 19 des Ein- und Ausgießstutzens 1 und der Biegung 8 des Belüftungskanales 2 ein.

Für das Aufblasen des Behälters ist der in Fig.8 und 9 dargestellte, gegen Verdrehen gesicherte Blas- und Kalibrierdorn 20 vorgesehen, der den Blaskanal 21 und den diesen umgebenden Rückströmkanal 22 aufweist. Im Blas- und Kalibierdorn 20 ist ein nach seinem Einfahren in den von ihm kalibrierten Ein- und Ausgießstutzen1 ausfahrbarer Nebendorn 23 zum Aufblasen des Belüftungskanals 2 angeordnet. Die Einlaßöffnung 9 des Belüftungskanals 2 ist beim Schließen des Blaswerkzeugs noch nicht oder nur unzureichend entstanden. Der Nebendorn 23 formt dann die Einlaßöffnung 9 und bläst den Belüftungskanal 2 in seiner ganzen Länge auf. Der Nebendorn 23 weist wie der Blas- und Kalibrierdorn 20 einen Blaskanal 24 und einen Rückströmkanal 25 auf.

In einer anderen Ausführungsform kann der Nebendorn 23 auch feststehend sein, dann aber weiter heraustretend, so daß er die Einlaßöffnung 9 des Belüftungskanales 2 unmittelbar nach Einschieben des Blas- und Kalibrierdorns 20 in den Ein- und Ausgießstutzen 1 ausformt und den Belüftungskanal 2 aufbläst.

## Patentansprüche

1. Stapelbarer Behälter für Lagerung und Transport von Flüssigkeiten, insbesondere gefährlichen Flüssigkeiten, der im Blasverfahren aus Kunststoff hergestellt ist und einen Ein- und Ausgießstutzen (1) an einer Seitenwand (14) und einen im Blasvorgang durch Quetschkanten (17) des Blaswerkzeugs gebildeten Belüftungskanal (2) zur Belüftung des bei Entleeren des Behälters in diesem entstehenden Unterdruckbereichs (4) mit einer im Ein- und Ausgießstutzen (1) des Behälters vorgesehenen Auslaßöffnung (9) aufweist,
dadurch gekennzeichnet, daß
a) die Unterseite des im wesentlichen waagerecht oberhalb des Oberbodens (5) des Behälters verlaufenden Belüftungskanales (2) in einem Winkel von 2° bis 15° schräg abwärts zur dem Ein- und Ausgießstutzen (1) gegenüberliegenden Behälterseitenwand (16) verläuft;
b) der Belüftungskanal (2) so weit heraufgeführt ist, daß ein ununterbrochener Gewindegang erhalten bleibt und damit die Dichtfläche der Öffnung des Ein- und Ausgießstutzens (1) rundum kreisförmig durchgehend geschlossen ist;
c) die unteren, durch die den Belüftungskanal (2) bildenden Quetschkanten (17) unterbrochenen Gewindegänge des Gewindes (11) des Ein- und Ausgießstutzens (1) auf der Rückseite des Belüftungskanales (2) erhalten geblieben sind.

2. Behälter nach Anspruch 1,
dadurch gekennzeichnet, daß er ohne separate Stapelhilfe stapelbar ist.

3. Behälter nach Anspruch 1, 2,
dadurch gekennzeichnet, daß der Winkel der Unterseite des Belüftungskanals (2) vorzugsweise 5° beträgt.

4. Behälter nach Anspruch 1, 2, 3,
dadurch gekennzeichnet, daß der Belüftungskanal (2) mit einem Nebenblasdorn (23) aufgeblasen ist.

5. Blaswerkzeug zur Herstellung eines Behälters nach Anspruch 1, 2, 3, 4, mit zwei untereinander symmetrischen Teilen, die jeweils eine Quetschkante (17) aufweisen, mit der ein Formnest für den Belüftungskanal (2) in einer einen schmalen Steg (6) bildenden Quetschzone vom Formnest für den Behälterinnenraum und den Ein- und Ausgießstutzen (1) getrennt ist sowie mit einem Blasdorn (20),
dadurch gekennzeichnet, daß die Quetschkanten (17) in einer Biegung (8) bis zur Höhe des obersten Gewindeganges des Gewindes (11) des Ein- und Ausgießstutzens (1) hochgezogen sind, und daß die Form für die Bildung des Gewindes (11) bis auf dessen obersten Gewindegang durch diese Biegung (8) der Quetschkanten (17) unterbrochen ist, daß die Quetschkanten (17) an ihrem rückwärtigen Ende zurückgenommen sind, um dort einen Spalt zwischen den Wänden des Vorformlings zur Bildung der Einlaßöffnung (7) des Belüftungskanals (2) offenzulassen und daß der Blasdorn (20) auch als Kalibirierdorn ausgebildet ist und einen axial verschiebbaren Nebendorn (23) zur Bildung der Auslaßöffnung (9) des Belüftungskanales (2) zu dessen Aufblasen aufweist.

## Claims

1. Stackable plastic container for storing and handling liquids, in particular dangerous liquids, which is manufactured of plastic material by a blowing process and which has a filling and pouring spout (1) at a side wall (14) and a venting channel (2) formed by squeezing edges (17) of the blow mold in the course of said blowing process for venting the vacuum space (4) created in the container when the latter is discharged, with an inlet (9) provided in said filling and pouring spout (1) of the container,
characterized in that
(a) the underside of said venting channel (2) which extends substantially horizontally above the upper wall (5) of the container is inclined downward at an angle of 2° to 15° toward the rear wall (16) of the container, which is opposite to said filling and pouring spout (1);
(b) said venting channel (2) is raised upward so high that a continuous thread winding is retained and hence the sealing surface of the opening of said filling and pouring spout (1) in continuously closed in a circular form;
(c) the lower windings of the thread (11) of said filling and pouring spout (1), which are interrupted by said squeezing edges (17) forming said venting channel (2), remain retained on the backside of said venting channel (2);

2. Container according to Claim 1,
characterized in that it is stackable without any separate ancillary stacking means.

3. Container according to Claims 1, 2,
characterized in that the angle of inclination of the underside of said venting channel (2) amounts preferably to 5°.

4. Container according to Claims 1, 2, 3,
characterized in that said venting channel (2) is blown by means of an auxiliary blowing finger (23).

5. Blow mold for the manufacture of a container according to Claims 1, 2, 3, 4, comprising two mutually symmetrical parts which comprise each a squeezing edge (17) which serves to separate shaping pocket for shaping said venting channel (2) in a squeezing zone constituing a narrow stay (6) from said shaping pocket for shaping the interior space of the container and form said filling and pouring spout (1), as well as comprising a blower finger (20),
characterized in that said squeezing edges (17) are raised upward in a bend (8) up to the level of the uppermost thread winding of said thread (11) of said filling and pouring spout (1); and that the mold for forming said thread (11), with the exception of the uppermost thread winding thereof, is interrupted by this bend (8) of said squeezing edges (17); that said squeezing edges (17) are retracted at their rearward ends so as to leave there a gap between the walls of the preformed blank for forming the outlet opening (7) of said venting channel (2); and that said blower finger (20) is designed at the same time as a calibrating finger and includes an axially displaceable auxiliary finger (23) for forming the inlet opening (9) of said venting channel (2) for blowing up the latter.

## Revendications

1. Conteneur empilable approprié à stocker et transporter des liquides, en particulier des liquides dangereux, qui est fait en une matière synthétique par un procédé de soufflage, et qui présente une tubulure de remplissage et de déversement (1) à une paroi latérale (14) et un conduit de ventilation (2) formé par des bords d'écrasement (17) d'un outil de soufflage au cours d'une opération de soufflage, pour la ventilation de la zone de dépression (4) créée dans le conteneur quand ce dernier est vidé, ce conduit étant muni d'une ouverture de sortie (9) prévue dans ladite tubulure de remplissage et de déversement (1) du conteneur,
caractérisé en ce que
(a) la face inférieure du conduit de ventilation (2), qui s'étend essentiellement de façon horizontale au-dessus du fond supérieur (5) du conteneur est inclinée vers le bas suivant un angle de 2° à 15° vers la paroi latérale (16) du conteneur, qui est opposée à la tubulure de remplissage et de déversement (1);
(b) le conduit de ventilation (2) est amené à un niveau suffisamment haut pour qu'un pas de vis ininterrompu soit conservé et que la surface d'étanchéité de l'ouverture de la tubulure de remplissage et de déversement (1) soit ainsi fermée tout autour en forme de cercle;
(c) les pas de vis inférieurs du filetage (11) de la tubulure de remplissage et de déversement (1), qui sont interrompus par les bords d'écrasement (17) formant le conduit de ventilation (2), sont conservés du côté arrière du conduit de vebtilation (2).

2. Conteneur selon la revendication 1,
caractérisé en ce qu'il est empilable sans aucum moyen auxiliaire séparé d'empilage.

3. Conteneur selon les revendications 1, 2,
caractérisé en ce que l'angle d'inclinaison de la face inférieure du conduit de ventilation (2) est de l'ordre de 5° de préférence.

4. Conteneur selon les revendications 1, 2, 3,
caratérisé en ce que le conduit de ventilation (2) est soufflé au moyen d'un mandrin souffleur secondaire (23).

5. Outil de soufflage pour la fabrication d'un conteneur selon les revendications 1, 2, 3, 4, comprenant deux parties symétriques l'une par rapport l'autre, qui comprennent chacune un bord d'écrasement (17) qui sert de séparateur entre une poche de moulage du conduit de ventilation (2) dans une zone d'écrasement, qui constitue une traverse étroite (6), et la poche de moulage pour l'intérieur du conteneur, et pour la tubulure de remplissage et de déversement (1), et comprenant un mandrin souffleur (20),
caractérisé en ce que lesdits bords d'écrasement (17) sont tirés vers le haut selon une courbure (8) jusqu'au niveau du pas de vis supérieur du filetage (11) de la tubulure de remplissage et de déversement (1), - et en ce que le moule de réalisation du filetage (11), est interrompu à l'exception du pas de vis supérieur par cette courbure (8) des bords d'écrasement (17) - en ce que les bords d'écrasement (17) sont en retrait à leurs extrémités arrière de façon à laisser une fente entre les parois de l'ébauche pour le moulage de l'ouverture d'admission (7) du conduit de ventilation (2), - et en ce que le mandrin souffleur (20) est également conçu sous forme de mandrin de calibrage et comprend un mandrin secondaire (23), à déplacement axial, pour former l'ouverture de sortie (9) du conduit de ventilation (2) en vue du soufflage de ce dernier.
